# EUROPEAN PATENT SPECIFICATION

(11) **EP 1 505 753 B1**
(45) Date of publication and mention of the grant of the patent: **05.09.2007**
(21) Application number: 03024436.2
(22) Date of filing: 23.10.2003
(51) Int. Cl.: H04J 3/16, H04J 14/02

(54) **Wavelength division multiplexing passive optical network**
Auf Wellenlängenmultiplex beruhendes passives optisches Netzwerk
Réseau optique passif à multiplexage de longueurs d'ondes

(30) Priority: 07.08.2003 KR 2003054536
(43) Date of publication of application: 09.02.2005
(73) Proprietor: Choi, Jun-Kook, Kangnam-Gu, Seoul (KR)
(72) Inventor: Choi, Jun-Kook, Seoul (KR); Lee, So-Young, (KR); Kang, Seung-Min 3323 Techno Bldg., Daegu (KR)
(74) Representative: Grünecker, Kinkeldey, Stockmair & Schwanhäusser Anwaltssozietät

(56) References cited:
- WO-A-02/054629
- DE-A1- 10 050 936
- DAVEY R ED - FAULKNER D W ET AL: "FROM THE BT WDM DEPLOYMENTS TO AN OPTICAL LAYER?" PROCEEDINGS OF THE EUROPEAN CONFERENCE ON NETWORKS AND OPTICAL COMMUNICATIONS 1999. NOC'99. CORE NETWORKS AND NETWORK MANAGEMENT, AMSTERDAM : IOS PRESS, NL, vol. PART 2, 1999, pages 239-246, XP000829438 ISBN: 90-5199-497-4
- OBARA H ET AL: "Transmission over a 200-km single-fiber bidirectional ring network with reconfigurable WDM add/drop repeaters" IOOC - ECOC '97. 11TH INTERNATIONAL CONFERENCE ON INTEGRATED OPTICS AND OPTICAL FIBRE COMMUNICATIONS / 23RD EUROPEAN CONFERENCE ON OPTICAL COMMUNICATIONS. EDINBURGH, SEPT. 22 - 25, 1997, IEE CONFERENCE PUBLICATION, LONDON : IEE, UK, vol. VOL. 3 NO. 448, 22 September 1997 (1997-09-22), pages 9-12, XP006508593 ISBN: 0-85296-697-0

## Description

### BACKGROUND OF THE INVENTION

### Field of the Invention

The present invention relates to a wavelength division multiplexing (WDM) passive optical network (PON) system, and more particularly to a ring type WDM PON system using the same wavelength for forward and backward channels while inexpensively implementing a redundancy function, and a switching media converter usable in the ring type WDM PON system.

### Description of the Related Art

A WDM system is known as a system in which different wavelengths are assigned to respective subscribers by a central office (CO) so that the central office can simultaneously transmit data to the subscribers. Respective subscribers can transmit data, using different wavelengths assigned thereto. This system has advantages in that it can provide a large quantity of information to each subscriber while maintaining a high security and easily achieving an improvement in performance.

Also, a PON is known which has an architecture based on an optical network. In such a PON, an optical line termination (OLT) can be connected with a plurality of optical network units (ONUs) via an optical cable, using a passive optical cross-connect element. In this PON, data from a central office is transmitted to a remote node (RN) via a trunk fiber, and then transmitted to respective subscribers via distribution fibers by a passive optical cross-connect element provided at the remote node. That is, the connection between the central office and the remote node installed in an area adjacent to subscribers is achieved using a trunk fiber, whereas the connection between the remote node and each ONU is achieved using a distribution fiber. In accordance with such a connection structure, it is possible to reduce the cable installation costs, as compared to the case in which an optical cable is installed between the central office and each subscriber.

Meanwhile, the physical topology of an optical network is selected from a ring type, a bus type, and a star type, upon designing the optical network in accordance with an application of the optical network. The concept corresponding to the physical topology of an optical network is a logical topology. This logical topology is also selected from a ring type, a bus type, and a star type in accordance the physical and logical connection states of constitutive elements in the optical network. As compared to other types, the ring type topology has been recognized as exhibiting a satisfactory reliability in backbone architecture and networks because it can perform a self-healing function even when system failure occurs due to any disaster or accident.

Early developed WDM ring architectures were unidirectional. In order to implement a bi-directional WDM ring architecture, therefore, it is necessary to use a double fiber. Recently, research on single fiber bi-directional ring networks has been conducted. In accordance with this research, single fiber bi-directional ring networks are implemented using bi-directional add/drop modules (B-ADMs) of a new type (disclosed in, for example, C. H. KIM et al., "Bi-directional WDM Self-Healing Ring Network Based on Simple Bi-directional Add/Drop Amplifier Modules"; and Y. Zhao et al., "A Novel Bi-directional Add/Drop Module for Single Fiber Bi-directional Self-Healing Wavelength Division Multiplexed Ring Networks").

Conventional systems having a self-healing function use a double fiber ring architecture. When system failure occurs due to fiber breakage in such a system, the path defined between nodes at opposite ends of the switched fiber in the system is bypassed over the self-healing fiber by an active element. Thus, the switched system can be self-healed. However, this self-healing system has a problem of an increase in the fiber installation costs caused by the double fiber ring architecture.

Also, the above mentioned single fiber bi-directional ring networks using B-ADMs are complex and expensive while having a problem in that new type optical elements should be used.

Meanwhile, use of a system using an Ethernet is increasing in most networks because the system can be inexpensively implemented while being compatible with conventional Internet traffic. However, such an Ethernet system has not been practically applied to backbone networks because it does not have a self-healing function coping with disaster or other network disabling statuses, so that it does not have a verified reliance.

As a technique for solving the above mentioned problems, there is a "ring type WDM PON system" disclosed in the Korean Patent Application No. 2002-76191 filed in the name of the applicant in the Korean Intellectual Property Office and in the corresponding European Patent Application EP 1388963. As shown in Fig. 1, the disclosed "ring type WDM PON system" includes a central office CO including a first multiplexer/demultiplexer MUX1 adapted to perform a multiplexing/demultiplexing operation for normal signals to be used in a normal state, and a second multiplexer/demultiplexer MUX2 adapted to perform a multiplexing/demultiplexing operation for self-healing signals to be used for a self-healing purpose. Each multiplexer/demultiplexer performs functions of generating optical signals of N different wavelengths, multiplexing the optical signals, and transmitting the resultant multiplexed optical signal to remote nodes RN via a trunk fiber, while demultiplexing a multiplexed signal received from the remote nodes RN.

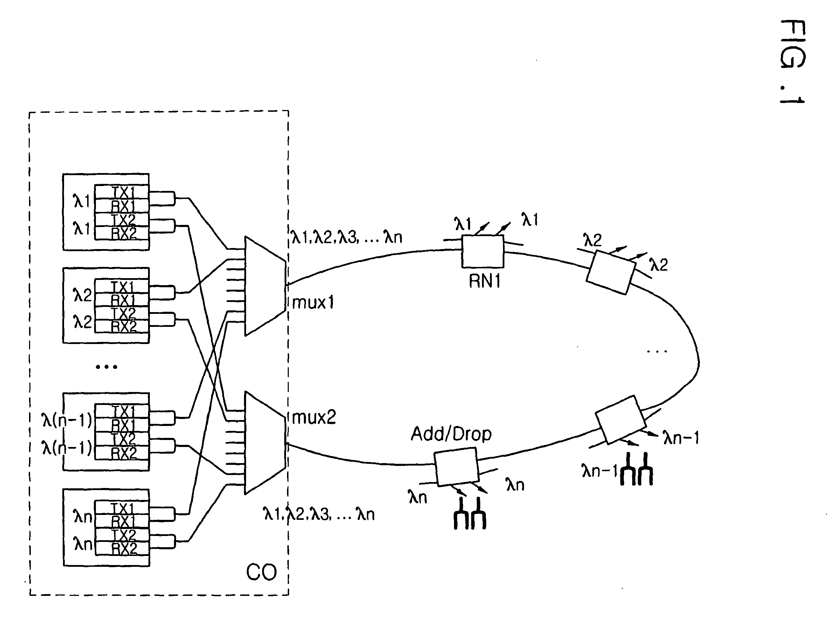

As shown in Fig. 1, the central office CO includes, for each wavelength, two transmitting/receiving units each including a transmitter Tx and a receiver Rx, in order to implement a general redundancy. One transmitting/receiving unit, for example, the first transmitting/receiving unit including a transmitter Tx1 and a receiver Rx1, is connected to one multiplexer/demultiplexer, for example, the first multiplexer/demultiplexer MUX1, for a normal operation, whereas the other transmitting/receiving unit, for example, the second transmitting/receiving unit including a transmitter Tx2 and a receiver Rx2, is connected to the other multiplexer/demultiplexer, for example, the second multiplexer/demultiplexer MUX1, for a redundancy purpose.

However, the above mentioned ring type WDM PON system has a drawback in that the architecture of the central office CO is complex because two transmitting/receiving modules for each wavelength and two multiplexers/demultiplexers are used to provide a redundancy for coping with fiber breakage or failure of a laser diode (LD) (corresponding to a transmitter) or photodiode (PD) (corresponding to a receiver) associated with a particular channel. Accordingly, it is required to develop a system capable of solving the problem.

Where the above mentioned ring type network architecture is configured to have a redundancy for all nodes, there may be problems in terms of costs and functions. To this end, it is necessary to develop a system configured taking into consideration such problems. It is also necessary to develop a system in which even when fiber breakage occurs at a node provided with a redundancy function, it can be rapidly detected by a lower-order layer of the node.

A WDM system comprising a splitter to broadcast over a working and a protection fibre is known from Davy R.: From the BT WDM deployment to an optical layer?, proceedings of the European Conference on Networks and Optical Communication 1999, NOC'99, Core Networks and Network Management, Amsterdam IOS Press, NL part II, 1999, pages 239 to 246, XP00829438. Furthermore WO 02/054629 discloses methods to maintain quality of packet traffic in optical networks when a failure of an optical link occurs, wherein traffic is simultaneously transmitted on two separate fibres from the source to the destination, so when one fibre is broken transmission still occurs via the other one.

### SUMMARY OF THE INVENTION

Therefore, an object of the present invention is to provide a ring type WDM PON system using the same wavelength for forward and backward channels, which has a single fiber bi-directional ring architecture, thereby being capable of simplifying the architecture of its central office while ensuring a desired redundancy.

Another object of the invention is to provide a ring type WDM PON system using the same wavelength for forward and backward channels, which is configured to provide a redundancy for a part of its nodes, taking into consideration the significance of each node, thereby minimizing the network construction costs.

Another object of the invention is to provide a ring type WDM PON system using the same wavelength for forward and backward channels, in which fiber breakage occurring at a node provided with a redundancy function can be rapidly detected by a lower-order layer of the node.

In accordance with one aspect, the present invention provides a ring type wavelength division multiplexing passive optical network (WDM PON) system using the same wavelength for forward and backward channels, comprising: a central office including general media converters (MCs) each having a transmitter adapted to convert an electrical signal into an optical signal to be outputted, and a receiver adapted to receive an optical signal having the same wavelength as the output optical signal, and to convert the received optical signal into an electrical signal to be outputted, and a WDM multiplexer/demultiplexer (MUX/DEMUX) for multiplexing optical signals of different wavelengths respectively outputted from the general MCs, and externally outputting the resultant multiplexed optical signal, the WDM MUX/DEMUX also demultiplexing a multiplexed signal, externally inputted thereto, and outputting the resultant demultiplexed signals to respective general MCs; a coupler for transmitting the multiplexed signal outputted from the WDM MUX/DEMUX through two different optical communication lines in a distributed manner, while transmitting an optical signal received from any one of the optical communication lines to the WDM MUX/DEMUX; the optical communication lines constructing a ring type distribution network through bi-directional add/drop devices each coupled to the optical communication lines; and remote nodes including redundancy MCs respectively coupled to the bi-directional add/drop devices, each of the redundancy MCs functioning to detect a line breakage, and to transmit an optical signal only in a clockwise or counter-clockwise direction in accordance with the result of the detection.

At least one of the remote nodes may further include a 3-port add/drop device coupled to the optical communication lines constructing the ring type distribution network.

Preferably, each of the bi-directional add/drop devices comprises first and second WDM thin film filters having opposite signal travel directions between the optical communication lines. The first WDM thin film filter drops a particular wavelength one of optical signals, received from a first one of the optical communication lines, to a master channel of the redundancy MC coupled to the bi-directional add/drop device, while receiving an optical signal having the same wavelength as the dropped optical signal, and reflecting the received optical signal to the first optical communication line. The second WDM thin film filter drops the particular wavelength one of optical signals, received from a second one of the optical communication lines, to a slave channel of the redundancy MC, while receiving an optical signal having the same wavelength as the dropped optical signal, and reflecting the received optical signal to the second optical communication line.

Preferably, each of the redundancy MCs comprises: first and second couplers respective connected to the master channel and the slave channel; master and slave transmitting/receiving units respectively connected to the first and second couplers, each of the master and slave transmitting/receiving units functioning to convert an electrical signal into an optical signal, and to transmit the optical signal to the coupler connected thereto, while functioning to convert an optical signal received from the connected optical coupler into an electrical signal, and to output the electrical signal to an optical network unit; a control unit for detecting respective states of the master and slave transmitting/receiving units and a fiber breakage status, thereby activating a selected one of the master and slave transmitting/receiving units to perform transmitting and receiving operations; and interfaces respectively connected to the master and slave transmitting/receiving units, each of the interfaces performing a data interfacing operation between an associated one of the master and slave transmitting/receiving units and the optical network unit.

### BRIEF DESCRIPTION OF THE DRAWINGS

The above objects, and other features and advantages of the present invention will become more apparent after reading the following detailed description when taken in conjunction with the drawings, in which:
Fig. 1 is a schematic diagram illustrating the configuration of a ring type WDM PON system using the same wavelength for forward and backward channels;
Fig. 2 is a schematic diagram illustrating the configuration of a ring type WDM PON system using the same wavelength for forward and backward channels in accordance with an embodiment of the present invention;
Fig. 3 is a schematic diagram illustrating the configuration of a 4-port add/drop device shown in Fig. 2;
Fig. 4 is a schematic diagram illustrating a detailed configuration of a switching media converter for a redundancy purpose shown in Fig. 2;
Fig. 5 is a flow chart illustrating a line switching operation carried out by a central processing unit (CPU) shown in Fig. 4; and
Fig. 6 is a schematic diagram of a ring type WDM PON system using the same wavelength for forward and backward channels in accordance with another embodiment of the present invention.

### DESCRIPTION OF THE PREFERRED EMBODIMENTS

Now, preferred embodiments of the present invention will be described in detail with reference to the annexed drawings. In the following description of the present invention, a detailed description of known functions and configurations incorporated herein will be omitted when it may make the subject matter of the present invention rather unclear.

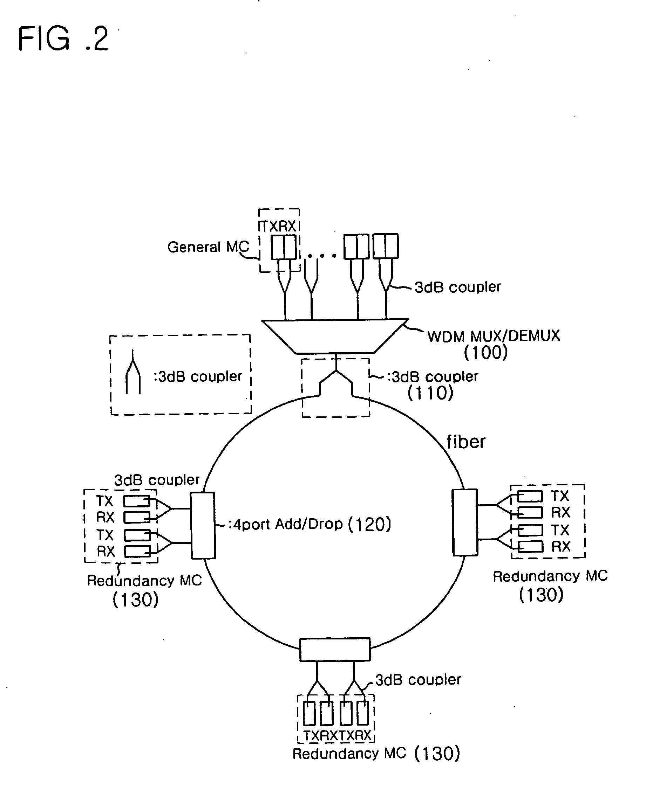

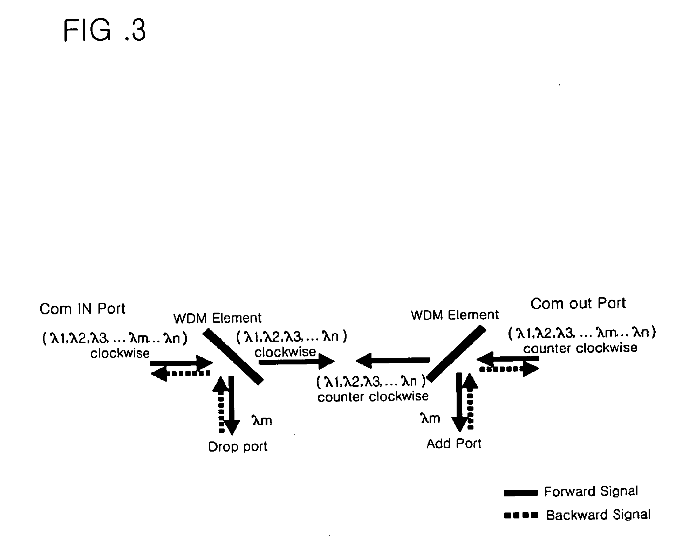

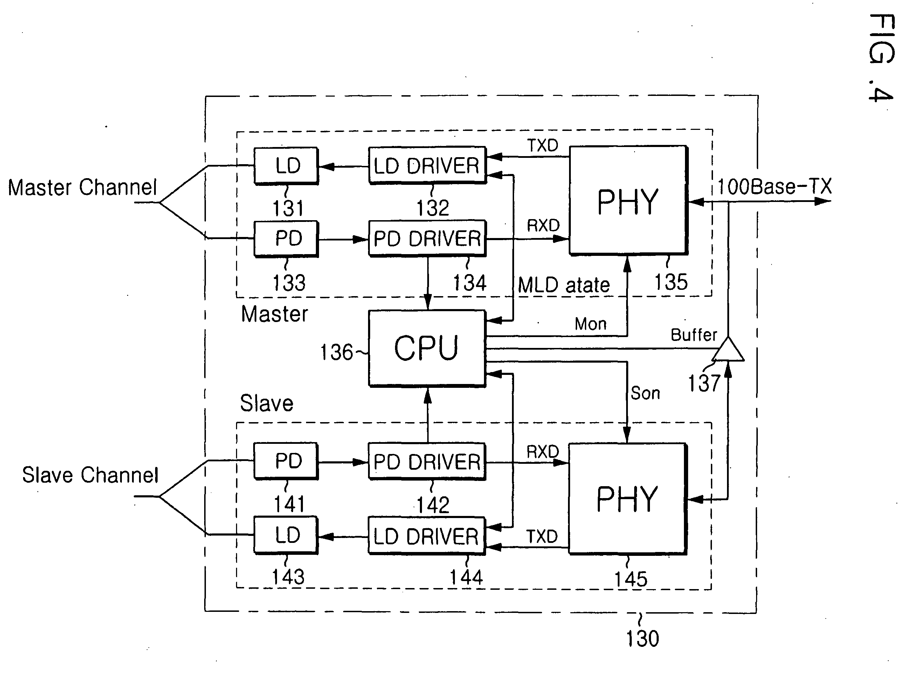

Fig. 2 is a schematic diagram illustrating the configuration of a ring type WDM PON system using the same wavelength for forward and backward channels in accordance with an embodiment of the present invention. Fig. 3 is a schematic diagram illustrating the configuration of a 4-port add/drop device 120 shown in Fig. 2. Fig. 4 is a schematic diagram illustrating a detailed configuration of a switching media converter 130 for a redundancy purpose shown in Fig. 2.

Referring to Fig. 2, the ring type WDM PON system according to the illustrated embodiment of the present invention includes a central office (CO), and bi-directional add/drop devices 120 and redundancy media converters (MCs) 130 connected to the central office via optical communication lines.

The central office includes general media converters (MCs) each having a transmitter TX adapted to convert an electrical signal into an optical signal to be outputted, and a receiver RX adapted to receive an optical signal having the same wavelength as the output optical signal, and convert the received optical signal into an electrical signal to be outputted. The central office also includes a WDM multiplexer/demultiplexer (MUX/DEMUX) 100 for multiplexing optical signals of different wavelengths respectively outputted from the general MCs, and externally outputting the resultant multiplexed optical signal. The WDM MUX/DEMUX 100 also demultiplexes a multiplexed signal, externally inputted thereto, and outputs the resultant demultiplexed signals to respective general MCs. A 3dB coupler is coupled between each general MC and the WDM MUX/DEMUX 100 in the central office. The 3dB coupler also serves as a splitter for distributing the demultiplexed optical signals from the WDM MUX/DEMUX 100 to both the transmitters TX and receivers RX of respective general MCs.

Also, a 3dB coupler 110 is coupled to a signal output stage (also serving as a signal input stage) of the central office. The coupler 110 transmits the multiplexed signal outputted from the WDM MUX/DEMUX 100 through two different optical communication lines (optical fibers) in a distributed manner. The coupler 110 also transmits an optical signal received from any one of the optical communication lines to the WDM MUX/DEMUX 100.

The reason why the output from the central office is transmitted through two paths in a distributed manner by the coupler 110 is to provide a redundant channel to cope with fiber breakage or failure of the transmitter (LD) or receiver (PD) associated with a particular channel.

The optical communication lines of different transmission directions connected to the coupler 110 construct a ring type distribution network, as shown in Fig. 2. Bi-directional add/drop devices 120 are arranged at appropriate points of the ring type distribution network, respectively, in order to support signals to travel normally in both directions while dropping an optical signal having a wavelength associated with a particular subscriber. In the illustrated embodiment, each bi-directional add/drop device 120 is a bi-directional 4-port add/drop device.

The bi-directional add/drop device 120 includes two WDM elements having opposite signal travel directions between the opposite optical communication lines constructing a ring type distribution network, that is, first and second optical communication lines. That is, the bi-directional add/drop device 120 includes a first WDM thin film filter for dropping a particular wavelength one, λₘ, of optical signals, received from the first optical communication line connected to an input port Com IN Port of the bi-directional add/drop device 120, to a master channel of the associated redundancy MC 130, while receiving an optical signal having the same wavelength as the dropped optical signal, and reflecting the received optical signal to the first optical communication line, and a second WDM thin film filter for dropping the particular wavelength one, λₘ, of optical signals, received from the second optical communication line connected to another input port Com OUT Port of the bi-directional add/drop device 120, to a slave channel of the associated redundancy MC 130, while receiving an optical signal having the same wavelength as the dropped optical signal, and reflecting the received optical signal to the second optical communication line.

By virtue of the bi-directional add/drop device 120, the associated remote node can transmit an optical signal received from an associated ONU in the ring type distribution network in a clockwise or counter-clockwise direction.

Meanwhile, redundancy MCs 130 are coupled to respective bi-directional add/drop devices 120. Each redundancy MC 130 detects fiber breakage, thereby transmitting an optical signal only in a clockwise or counter-clockwise direction. Each redundancy MC 130 may be directly connected to an associated ONU. Alternatively, the redundancy MC 130 may be connected to the associated ONU via an Ethernet.

Now, the redundancy MCs 130 will be described in more detail with reference to Fig. 4. As shown in Fig. 4, each redundancy MC 130 mainly includes a transmitting/receiving unit for a master channel, a transmitting/receiving unit for a slave channel, a central processing unit (CPU) 136, and physical-layer (PHY) chips 135 and 145.

3dB couplers are connected to the master and slave channels, respectively. These couplers may be internally arranged in the associated redundancy MC 130. Alternatively, they may be arranged outside the associated redundancy MC 130. It may be assumed that the master channel is connected to a drop port of the associated bi-directional add/drop device 120 shown in Fig. 3, which may serve as an add port for a backward signal. It may also be assumed that the slave channel is connected to an add port of the associated bi-directional add/drop device 120 shown in Fig. 3. On these assumptions, the optical signal transmitted through the drop port and master channel is distributed to both the transmitter and receiver for the master channel, that is, an LD 131 and a PD 133. On the other hand, the optical signal outputted from the transmitter for the master channel, that is, the LD 131, is transmitted to the central office via the coupler and drop port.

The master transmitting/receiving unit for the master channel and slave transmitting/receiving unit for the slave channel include respective LDs 131 and 143, which are light sources, for their transmitters, and respective LD drivers 132 AND 144 for driving the LDs 131 and 143. The master and slave transmitting/receiving units also include respective PDs 133 and 141, which are light sources, for their receivers, and respective LD drivers for driving the PDs 134 and 142. Each of the master and slave transmitting/receiving units converts an electrical signal into an optical signal, and transmits the optical signal to the coupler connected thereto, while converting an optical signal received from the optical coupler into an electrical signal, and outputting the electrical signal to an associated ONU via an interface 135 or 145.

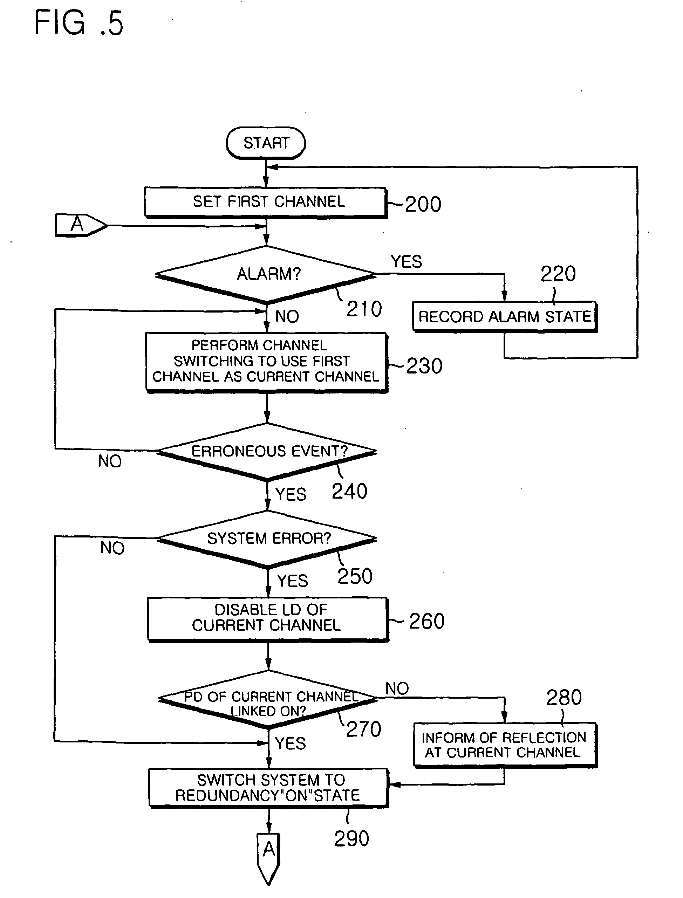

The CPU 136 controls the whole operation of the associated redundancy MC 130. For example, the CPU 136 detects respective states of the master and slave transmitting/receiving units and a fiber breakage status, based on control program data stored in its internal memory, so as to activate a selected one of the master and slave transmitting/receiving units to perform transmitting and receiving operations. This operation will be described hereinafter with reference to Fig. 5.

Each redundancy MC 130 according to the illustrated embodiment of the present invention further includes the interfaces 135 and 145 respectively connected to the master and slave transmitting/receiving units, and adapted to perform data interfacing operations. For the interfaces 135 and 145, PHY chips may be used. For reference, each redundancy MC 130 may further include a buffer 137 arranged at the rear end of the interface 145 connected to the slave transmitting/receiving unit, and adapted to perform a data buffering operation.

Now, the line switching operation carried out by the CPU 136 shown in Fig. 4 will be described in conjunction with Fig. 5.

When the system turns on, the CPU 136 of each redundancy MC 130 is switched to its initial state. In the initial state, the CPU 136 sets the master channel to a first channel (Step 200). After the operation of setting the master channel to the first channel, the CPU 136 checks whether or not an alarm is generated (Step 210). The CPU 136 can check generation of an alarm by reading respective states of the master and slave PDs 133 and 141. In the illustrated embodiment of the present invention, it is determined that an alarm has been generated, unless both the LD 131 and PD 133 are in their normal states, as described in the following Table 1. In Table 1, "0" represents a fault or disable state, whereas "1" represents an active or enable state.

**Table 1**

| MLD State | SLD State | MPD Link | SPD Link | Current State | Remarks |
|---|---|---|---|---|---|
| 0 | 0 | 0 | 0 | Alarm | |
| 0 | 0 | 0 | 1 | Alarm | |
| 0 | 0 | 1 | 0 | Alarm | |
| 0 | 0 | 1 | 1 | Alarm | |
| 0 | 1 | 0 | 0 | Alarm | |
| 0 | 1 | 0 | 1 | Slave | |
| 0 | 1 | 1 | 0 | Alarm | |
| 0 | 1 | 1 | 1 | Slave | |
| 1 | 0 | 0 | 0 | Alarm | |
| 1 | 0 | 0 | 1 | Alarm | |
| 1 | 0 | 1 | 0 | Master | Reflection Check |
| 1 | 0 | 1 | 1 | Master | |
| 1 | 1 | 0 | 0 | Alarm | Disable Both |
| 1 | 1 | 0 | 1 | Slave | |
| 1 | 1 | 1 | 0 | Master | |
| 1 | 1 | 1 | 1 | Master | |

Where it is determined, based on the result of the alarm state checking at step 210, that the current state of the system corresponds to an alarm state, the CPU 136 records the current alarm state in its internal memory (Step 220), and then continuously monitors the state of the system.

If it is determined that the system is not in an alarm state, the CPU 136 then performs a channel switching operation for using the first channel set at step 200 as the current channel (Step 230). Thereafter, the CPU 136 checks whether or not an erroneous event has occurred, while maintaining the current state of the system (Step 240). Where an erroneous event occurs at the current channel under the condition in which the system is not in an alarm state, it is necessary to switch the current channel to a channel other than the current channel. For this channel switching, it is also necessary to perform a procedure for checking whether the erroneous event corresponds to a link error caused by reflection or a system error. For reference, where an optical fiber is broken such that it has a vertical surface at its broken end surface, reflection occurs at the broken end surface, so that an optical signal transmitted from a transmitter through the optical fiber may be returned to the transmitter. As a result, it is impossible to recognize the breakage of the optical fiber. Accordingly, it is necessary to identify an error caused by such reflection.

To this end, when the CPU 136 detects an erroneous event, it determines whether or not the erroneous event corresponds to a system error (Step 250). If no pilot packet from a remote location is received within a predetermined time, it is determined that a system error has occurred. Where the erroneous event does not correspond to a system error, the CPU 136 proceeds to step 290 to switch the system to a redundancy "ON" state. That is, the CPU 136 disables the current channel, that is, the master channel, while enabling a redundant channel, that is, the slave channel. Thereafter, the CPU 136 returns to step 210.

On the other hand, where it is determined that a system error has occurred, the CPU 136 disables the LD of the current channel, that is, the master LD 131, in order to determine whether or not the system error has been caused by reflection (Step 260). The CPU 136 then checks whether or not the PD of the current channel can be switched to a "link-on" state (Step 270). When the PD of the current channel can be switched to a "link-on" state, the CPU 136 proceeds to step 290 because the system error has not been caused by reflection. At step 290, the CPU 136 switches the system to the redundancy "ON" state. On the other hand, where the PD of the current channel cannot be switched to a "link-on" state, the CPU 136 informs the associated external device of the fact that reflection has occurred at the current channel, because the erroneous event detected at step 240 has been caused by reflection (Step 280). Subsequently, the CPU 136 proceeds to step 290 to switch the system to the redundancy "ON" state, and then returns to step 210.

Thus, the CPU 136 operates to detect fiber breakage, and switches the system to a redundancy "ON" state for use of a redundant channel when it detects fiber breakage. In a normal state, the central office and each remote node can perform normal optical transmission through the master channel. When a failure such as fiber breakage occurs, the CPU 136 included in the redundancy MC 130 of each remote node detects the failure, and switches the system to a redundancy "ON" state. Accordingly, the remote node and central office can perform normal optical transmission, not through the master channel, but through the slave channel.

Meanwhile, in network architectures having a redundancy function, it is important to use a technique for giving a priority to a particular node. In the case of a network architecture configured to have a redundancy for all nodes, there may be problems in terms of costs and functions. Generally, the cost taken to construct a network having a redundancy function is double the cost taken to construct a network having no redundancy function.

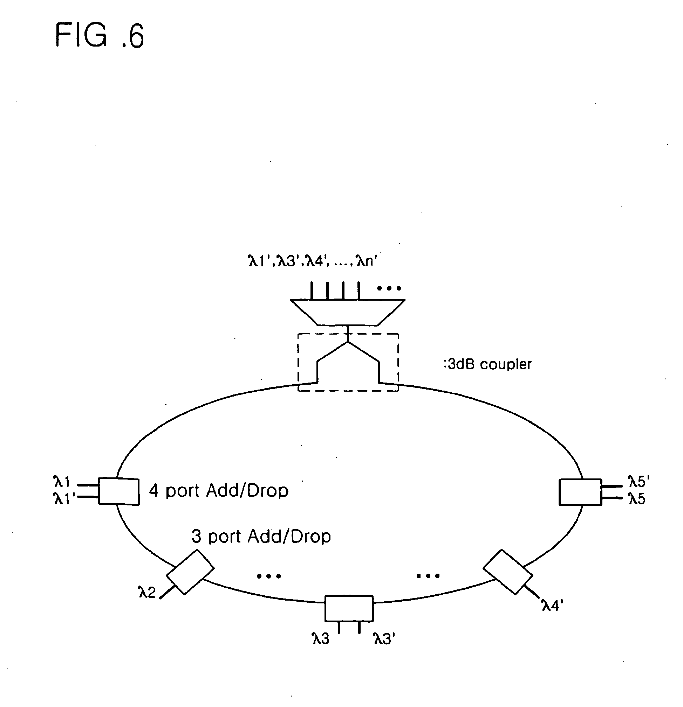

To this end, a hybrid type network may be constructed, using 3-port add/drop elements along with 4-port add/drop elements. A more effective network can be constructed by configuring an important node by a bi-directional add/drop element (4-port type) having a self-healing function. An example of such a network is illustrated in Fig. 6.

Fig. 6 illustrates a schematic diagram of a ring type WDM PON system using the same wavelength for forward and backward channels in accordance with another embodiment of the present invention. Referring to Fig. 6, optical power is transmitted through two lines in a distributed manner by a 3dB coupler at the side of the central office. On the other hand, 4-port add/drop devices and 3-port add/drop devices are arranged in a ring type distribution network. The 3-port add/drop devices are employed for general nodes which are relatively insignificant. In such a network, the 4-port add/drop devices change the optical travel direction between a clockwise direction and a counter-clockwise direction in accordance with fiber breakage, thereby performing a desired optical transmission.

In accordance with another embodiment of the present invention, a system may be constructed in which a bus type network architecture using the same wavelength for forward and backward channels while using 3-port add/drop devices is combined with a ring type network architecture using 4-port add/drop devices. In this system, it is also possible to heal a failure of the line by use of the 4-port add/drop devices, while reducing the system construction costs by using the 3-port add/drop devices for nodes which are relatively insignificant.

As apparent from the above description, the present invention provides a ring type WDM PON system in which a redundancy function is provided to each node, so that the central office of the system can have a simplified architecture. Accordingly, there is an advantage in that the construction costs of the central office can be reduced.

In accordance with the present invention, the network construction costs can be minimized because it is possible to provide a desired redundancy to a part of the nodes, taking into consideration the significance of each node.

In accordance with the present invention, there is another advantage in that fiber breakage occurring at a node can be rapidly detected at a lower-order layer of the node through a media converter having a redundancy function.

Although the preferred embodiments of the invention have been disclosed for illustrative purposes, those skilled in the art will appreciate that various modifications, additions and substitutions are possible, according to the accompanying claims.

## Claims

1. A ring type wavelength division multiplexing passive optical network, WDM PON, system using the same wavelength for forward and backward channels, comprising:
a central office, CO, including general media converters, MCS, each having a transmitter (TX) adapted to convert an electrical signal into an optical signal to be outputted, and a receiver (RX) adapted to receive an optical signal having the same wavelength as the output optical signal, and to convert the received optical signal into an electrical signal to be outputted, and a WDM multiplexer/demultiplexer, WDM MUX/DEMUX, (100) for multiplexing optical signals of different wavelengths respectively outputted from the general MCs, and externally outputting the resultant multiplexed optical signal, the WDM MUX/DEMUX (100) also for demultiplexing a multiplexed signal, externally inputted thereto, and outputting the resultant demultiplexed signals to respective general MCs; two optical communication lines;
bidirectional add/drop devices (120); and **characterised by**
a coupler (110) for transmitting the resultant multiplexed optical signal outputted fro the WDM MUX/DEMUX(100) through the optical communication lines in a distributed manner, while transmitting an optical signal received from any one of the optical communication lines to the WDM MUX/DEMUX (100), the optical communication lines constructing a ring type distribution network through the bi-directional add/drop devices (120) each coupled to the optical communication lines; and
remote nodes including redundancy MCs (130) respectively coupled to the bi-directional add/drop devices (120), each of the redundancy MCs (130) having means to detect a line breakage and to transmit an optical signal only in a clockwise or counter-clockwise direction in accordance with the result of the detection.

2. The ring type WDM PON system according to claim 1, wherein at least one of the remote nodes further includes a 3-port add/drop device coupled to the optical communication lines constructing the ring type distribution network.

3. The ring type WDM PON system according to claim 1 or 2, wherein each of the bi-directional add/drop devices comprises first and second WDM thin film filters having opposite signal travel directions between the optical communication lines,
the first WDM thin film filter of dropping a particular wavelength of one of optical signals, received from a first one of the optical communication lines, to a master channel of the redundancy MC (130) coupled to the bi-directional add/drop device, while receiving an optical signal having the same wavelength as the dropped optical signal, and reflecting the received optical signal to the first optical communication line, and
the second WDM thin film filter of dropping the particular wavelength of one of optical signals, received from a second on of the optical communication ines, to a slave channel of the redundancy MC (130), while receiving an optical signal having the same wavelength as the dropped optical signal, and reflecting the received optical signal to the second optical communication line.

4. The ring type WDM PON system according to claim 3, wherein each of the redundancy MCs (130) comprises:
first and second couplers respective connected to the master channel and the slave channel;
master and slave transmitting/receiving units respectively connected to the first and second couplers, each of the master and slave transmitting/receiving units having means to convert an electrical signal into an optical signal and to transmit the optical signal to the coupler connected thereto, while converting an optical signal received from the connected optical coupler into an electrical signal and outputting the electrical signal to an electronical network unit;
a control unit (136) for detecting respective states of the master and slave transmitting/receiving units and a fiber breakage status, thereby activating a selected one of the master and slave transmitting/receiving units to perform transmitting and receiving operations; and
interfaces (135, 145) respectively connected to the master and slave transmitting/receiving units, each of the interfaces for performing a data interfacing operation between an associated one of the master and slave transmitting/receiving units and the electronical network unit.

5. The ring type WDM PON system according to claim 4, wherein the control unit (136) is for disabling a transmitter included in the transmitting/receiving unit associated with the currently-activated channel, and detecting whether or not a receiver included in the associated transmitting/receiving unit can be switched to a link-on state, thereby determining whether or not a fiber breakage status occurs.

## Patentansprüche

1. Ringartiges, auf Wellenlängen-Multiplexing beruhendes passives optisches Netz, WDM PON, System, das die gleiche Wellenlänge für Vorwärts- und Rückwärtskanäle verwendet, das umfasst:
eine Vermittlung, central office - CO, die allgemeine Medienkonverter, MC enthält, die jeder einen Sender (TX), der so eingerichtet ist, dass er ein elektrisches Signal in ein auszugebendes optisches Signal umwandelt, und einen Empfänger (RX) haben, der so eingerichtet ist, dass er ein optisches Signal mit der gleichen Wellenlänge wie das ausgegebene optische Signal empfängt und das empfangene optische Signal in ein auszugebendes elektrisches Signal umwandelt, sowie einen WDM-Multiplexer/Demultiplexer, WDM MUX/DEMUX (100) zum Multiplexen optischer Signale unterschiedlicher Wellenlängen, die jeweils von den allgemeinen Medienkonvertem ausgegeben werden, und zum Ausgeben des entstehenden, Multiplexen unterzogenen optischen Signals nach außen, haben, wobei der WDM-Multiplexer/Demultiplexer (100) auch dazu dient, ein Multiplexing unterzogenes Signal, das von außen in ihn eingegeben wird, Demultiplexen zu unterziehen und die entstehenden, Demultiplexen unterzogenen Signale an jeweilige allgemeine Medienkonverter auszugeben;
zwei optische Kommunikationsleitungen;
bidirektionale Add/Drop-Vorrichtungen (120); und **gekennzeichnet durch**
einen Koppler (110) zum Senden des entstehenden, Multiplexen unterzogenen optischen Signals, das von dem WDM-Multiplexer/Demulitplexer (100) auf verteilte Weise über die optischen Kommunikationsleitungen ausgegeben wird, und zum gleichzeitigen Senden eines von einer der optischen Kommunikationsleitungen empfangenen optischen Signals zu dem WDM-Multiplexer/Demultiplexer (100), wobei die optischen Kommunikationsleitungen ein ringartiges Verteilungsnetz über die bidirektionalen Add/Drop-Vorrichtungen (120) bilden, die jeweils mit den optischen Kommunikationsleitungen gekoppelt sind; und
entfernte Knoten einschließlich Redundanz-Medienkonverter (130), die jeweils mit den bidirektionalen Add/Drop-Vorrichtungen (120) gekoppelt sind, wobei jeder der Redundanz-Medienkonverter (130) eine Einrichtung zum Erfassen eines Leitungsbruchs hat, um ein optisches Signal entsprechend dem Ergebnis der Erfassung nur im Uhrzeigersinn oder gegen den Uhrzeigersinn zu senden.

2. Ringartiges WDM-PON-System nach Anspruch 1, wobei wenigstens einer der entfernten Knoten des Weiteren eine 3-Port-Add/Drop-Vorrichtung enthält, die mit den optischen Kommunikationsleitungen gekoppelt ist, die das ringartige Verteilungsnetz bilden.

3. Ringartiges WDM-PON-System nach Anspruch 1 oder 2, wobei jede der bidirektionalen Add/Drop-Vorrichtungen erste und zweite WDM-Dünnfilmfilter mit entgegengesetzten Signalausbreitungsrichtungen zwischen den optischen Kommunikationsleitungen umfasst,
das erste WDM-Dünnfilmfilter dazu dient, die bestimmte Wellenlänge eines der optischen Signale, das von einer ersten der optischen Kommunikationsleitungen empfangen wird, auf einen Master-Kanal des Redundanz-Medienkonverters (130) abzuzweigen, während ein optisches Signal mit der gleichen Wellenlänge wie das abgezweigte optische Signal empfangen wird, und das empfangene optische Signal zu der ersten optischen Kommunikationsleitung zu reflektieren
das zweite WDM-Dünnfilmfilter dazu dient, die bestimmte Wellenlänge eines der optischen Signale, das von einer zweiten der optischen Kommunikationsleitungen empfangen wird, auf einen Slave-Kanal des Redundanz-Medienkonverters (130) abzuzweigen, während ein optisches Signal mit der gleichen Wellenlänge wie das abgezweigte optische Signal empfangen wird, und das empfangene optische Signal zu der zweiten optischen Kommunikationsleitung zu reflektieren.

4. Ringartiges WDM-PON-System nach Anspruch 3, wobei jeder der Redundanz-Medienkonverter (130) umfasst:
einen ersten und einen zweiten Koppler, die mit dem Master-Kanal bzw. dem Slave-Kanal verbunden sind;
Master- und Slave-Sende-/Empfangseinheiten, die mit dem ersten bzw. dem zweiten Koppler verbunden sind, wobei jede der Master- und Slave-Sende-/Empfangseinheiten eine Einrichtung zum Umwandeln eines elektrischen Signals in ein optisches Signal und zum Senden des optischen Signals zu dem damit verbundenen Koppler bei gleichzeitigem Umwandeln eines von dem verbundenen optischen Koppler empfangenen optischen Signals in ein elektrisches Signal und zum Ausgeben des elektrischen Signals an eine elektronische Netzeinheit hat;
eine Steuereinheit (136) zum Erfassen jeweiliger Zustände der Master- und Slave-Sende-/Empfangseinheiten und eines Faserbruch-Status, um so eine ausgewählte der Master- und Slave-Sende-/Empfangseinheiten zum Durchführen von Sende- und Empfangsvorgängen zu aktivieren; und
Schnittstellen (135, 145), die jeweils mit den Master- und Slave-Sende-/Empfangseinheiten verbunden sind, wobei jede der Schnittstellen dazu dient, einen Datenanpassungsvorgang-zwischen einer zugehörigen der Master- und Slave-Sende-/Empfangseinheiten und der elektronischen Netzwerkeinheit durchzuführen.

5. Ringartiges WDM-PON-System nach Anspruch 4, wobei die Steuereinheit (136) dazu dient, einen Sender zu deaktivieren, der in der Sende-/Empfangseinheit enthalten ist, die mit dem momentan aktivierten Kanal verbunden ist, und dazu, zu erfassen, ob ein Empfänger, der in der zugehörigen Sende-/Empfangseinheit enthalten ist, in einen verbundenen Zustand geschaltet werden kann oder nicht, um so festzustellen, ob ein Faserbruchstatus vorliegt oder nicht.

## Revendications

1. Système de réseau optique passif à multiplexage par répartition en longueur d'onde de type anneau, WDM PON, utilisant la même longueur d'onde pour les canaux aller et retour, comprenant :
un bureau central, CO, comprenant des convertisseurs de supports généraux, MC, ayant chacun un émetteur (TX) adapté pour convertir un signal électrique en un signal optique à émettre, et un récepteur (RX) adapté pour recevoir un signal optique ayant la même longueur d'onde que le signal optique émis, et pour convertir le signal optique reçu en un signal électrique à émettre, et un multiplexeur/démultiplexeur WDM, WDM MUX/DEMUX, (100), destiné à multiplexer des signaux optiques de différentes longueurs d'ondes émis respectivement par les MC généraux et à générer en sortie le signal optique multiplexé résultant, le WDM MUX/DEMUX (100) servant également à démultiplexer un signal multiplexé, introduit depuis l'extérieur dans celui-ci, et à transmettre les signaux démultiplexés résultants aux MC généraux respectifs ;
deux lignes de communication optiques ;
des dispositifs bidirectionnels d'insertion/extraction de lignes de communication optiques (120) ; et **caractérisé par**
un coupleur (110) destiné à transmettre le signal optique multiplexé résultant émis par le WDM MUX/DEMUX (100) via les lignes de communication optiques d'une manière distribuée, tout en transmettant un signal optique reçu de l'une quelconque des lignes de communication optiques vers le WDM MUX/DEMUX (100), les lignes de communication optiques constituant un réseau de distribution de type anneau via les dispositifs bidirectionnels d'insertion/extraction (120) couplés chacun aux lignes de communication optiques ; et
des noeuds distants comprenant des MC de redondance (130) couplés respectivement aux dispositifs bidirectionnels d'insertion/extraction (120), chacun des MC de redondance (130) ayant des moyens pour détecter une rupture de ligne, et pour transmettre un signal optique seulement dans le sens horaire ou dans le sens antihoraire, selon le résultat de la détection.

2. Système WDM PON de type anneau selon la revendication 1, dans lequel au moins un des noeuds distants comprend en outre un dispositif d'insertion/extraction à 3 ports couplé aux lignes de communication optiques constituant le réseau de distribution de type anneau.

3. Système WDM PON de type anneau selon la revendication 1 ou 2, dans lequel chacun des dispositifs bidirectionnels d'insertion/extraction comprend des premier et second filtres à film mince WDM ayant des directions de déplacement de signal opposées entre les lignes de communication optiques,
le premier filtre à film mince WDM destiné à extraire une longueur d'onde particulière d'un des signaux optiques, reçue d'une première parmi les lignes de communication optiques, vers un canal maître du MC de redondance (130) couplé au dispositif d'insertion/extraction bidirectionnel, tout en recevant un signal optique ayant la même longueur d'onde que le signal optique extrait, et en renvoyant le signal optique reçu vers la première ligne de communication optique, et
le second filtre à film mince WDM destiné à extraire la longueur d'onde particulière d'un de signaux optiques, reçus d'une seconde parmi les lignes de communication optiques, vers un canal esclave du MC de redondance (130), tout en recevant un signal optique ayant la même longueur d'onde que le signal optique extrait, et en renvoyant le signal optique reçu vers la seconde ligne de communication optique.

4. Système de type anneau WDM PON selon la revendication 3, dans laquelle chacun des MC de redondance (130) comprend :
des premier et second coupleurs respectifs connectés au canal maître et au canal esclave ;
des unités d'émission/réception maître et esclave connectées respectivement aux premier et second coupleurs, chacune des unités d'émission/réception maître et esclave ayant des moyens de conversion d'un signal électrique en un signal optique, et de transmission du signal optique au coupleur connecté à celui-ci, tout en convertissant un signal optique reçu du coupleur optique connecté en un signal électrique, et en émettant le signal électrique vers une unité de réseau électronique ;
une unité de commande (136) destinée à détecter les états respectifs des unités d'émission/réception maître et
esclave et un état de rupture de fibre, en activant ainsi une sélectionnée parmi les unités d'émission/réception maître et esclave pour exécuter les opérations de transmission et de réception ; et
des interfaces (135, 145) connectées respectivement aux unités d'émission/réception maître et esclave, chacune des interfaces étant destinée à exécuter une opération d'interfaçage de données entre une associée parmi les unités d'émission/réception maître et esclave et l'unité de réseau électronique.

5. Système WDM PON de type anneau selon la revendication 4, dans lequel l'unité de commande (136) est destinée à désactiver un émetteur compris dans l'unité d'émission/réception associée au canal actuellement activé, et à détecter si un récepteur compris dans l'unité d'émission/réception associée peut ou non être commuté sur un état de liaison active, ce qui permet de déterminer si un état de rupture de fibre se produit ou non.
